# EUROPEAN PATENT APPLICATION

(11) **EP 3 127 434 A1**
(43) Date of publication of application: **08.02.2017**
(21) Application number: 15180296.4
(22) Date of filing: 07.08.2015
(51) Int. Cl.: A23P 10/35, A23P 20/10, A23P 20/15

(54) **THE USE OF E471 AS A COATING AGENT FOR FOOD INGREDIENTS AND THE METHOD OF PREPARATION OF E471 AS A COATING AGENT FOR FOOD INGREDIENTS**

(71) Applicant: Hasert, Robertus, 00-648 Warszawa (PL)
(72) Inventor: Hasert, Robertus, 00-648 Warszawa (PL)
(74) Representative: Sawicki, Igor

(57) **Abstract**

The use of E471 as a coating agent for food ingredients.

The method of preparation of E471 to be used as a coating agent for food ingredients as claimed in claim 1 characterised in that pure, undiluted E471 powder is heated until the E471 powder becomes a liquid which then is used to coat any food ingredient.

A food or a drink which comprises a coating agent.

## Description

The object of the invention is the use of E471 as a coating agent for food ingredients and the method of preparation of E471 as a coating agent for food ingredients.

Many food ingredients are coated with a layer of a coating agent to protect the ingredient from interacting with, for example, the surrounding air, moisture or other food ingredients. Producers use coated food ingredients to e.g. ensure that the product tastes the same as when it was just produced or that the flavour is released when the customer eats/heats up the product.

A few examples of food products containing coated food ingredients include sour-coated candy, chewing gum which has pockets of encapsulated flavour, healthy candy bars which have encapsulated nuts, fruit pieces, etc. inside and mixes of spices and herbs.

Food producers can choose from a range of coating agents. Currently, the most commonly used are: palm stearate, hardened vegetable oil, gelatine and carnaubawax (E903).

All of these have severe disadvantages. For example, palm stearate and hardened vegetable oils have been black-listed by many food producers; also carnaubawax (E903) and other waxes can only be used in limited quantities, as is described in food-laws and regulations; gelatine is from animal origin, which means that gelatine coated ingredients are not suitable for vegetarian products and are not suitable for Kosher/Halal applications.

As a result, there is a strong need to find alternative coatings to coat food-ingredients.

The aim of the present invention is to provide an alternative to food ingredients coating, i.e. a coating agent suitable to coat food ingredients which, among others, prevents the above described disadvantages from occurring; a coating layer formed with the described coating agent and foods containing the described coating agent.

This aim is realized by the application of E471 (mono- and di-glycerides of fatty acids) in a, so far, unknown and untested way.

Currently, E471, which is also referred to as mono- and di-glycerides of fatty acids, consists of a group of well-known food ingredients listed by the European Union as category 1 food ingredients. E471 is commonly used in food products, but as an emulsifier and/or stabiliser and/or anti-staling agent.

E471 (mono- and di-glycerides of fatty acids) are synthetic fats produced from glycerol and natural fatty acids of either plant or animal origin. The glycerides used in E471 are:
- mono-glycerides, both saturated as non-saturated
- di-glycerides, both saturated as non-saturated
- any combination of mono- and di-glycerides

According to the European Commission Directive 2008/84/EC of 27 August 2008, laying down specific purity criteria on food additives other than colours and sweeteners, E471 has to contain not less than 70% of mono- and di-glycerides.

E471 is also available in a trans-fat free quality.

E471, in commonly used form, has 60% - 100% mono-glycerides. The other 40% - 0% of the commonly used form of E471 are di-glycerides.

E471 is mostly purchased in powder form. As an emulsifier and/or stabiliser, this powder is dissolved in a fluid or dough (example: bread dough) in a low concentration (maximum 2%).

Other examples of food products containing E471 as an emulsifier and/or stabiliser include: cakes, hot-chocolate mix, aerosol creams, shaped crisps, quick custard mix, dehydrated potato and sponge puddings. Also E471 is used, where the foaming power of egg protein needs to be retained in the presence of fat as well as in baked goods as an 'anti-staling' agent, where it prevents the loss of water from starches.

E471 has never been tested nor used in its pure form as a coating agent for food ingredients. In literature, E471 is only described as an emulsifier, stabilizer or anti-staling agent. Neither have the effects of E471 treatment with temperature in combination with mentioned industrial coating application been described in literature.

In search of new coating agents for food ingredients it was found that the particular properties of E471 as a coating agent as described in the invention are linked to heat-treatment of pure, non-diluted E471 which may be next used as food ingredients coating. Therefore, this invention describes the use of any of the mentioned chemical or otherwise obtained substances described as E471 in European Commission Directive 2008/84/EC of 27 August 2008, to be used as a coating agent for food ingredients.

The invention relates to the use of E471 as a coating agent for food ingredients. The invention relates also to the method of preparation of E471 as a coating agent for food ingredients characterised in that pure, undiluted E471 powder is heated until the E471 powder becomes a liquid. This liquid can further be used within any of the coating processes (see further down) to coat food ingredients just like any of the existing food coating agents used currently in the food industry.

The process of heating pure, undiluted E471 powder until a liquid is formed and the use of this liquid as a coating agent for food ingredients is absolutely not a logical, not an obvious, not a subsequent or expected step in the way of using E471.

E471 as a coating agent can be used in any coating process.

The percentage of mono-glycerides and di-glycerides in E471 which is required for coating food ingredients depends on the products for which it is used and on the production process in which it is used as a coating for food ingredients. It depends also on the final effect to be achieved. For example, 100% mono-glycerides (0% di-glycerides) will give a hard coating which can be used at higher temperatures, but could crack/break when considerable mechanical strain is put on the coating during production. A mix of 60% mono-glycerides and 40% di-glycerides will give a considerably softer coating, which will be more elastic when mechanical strain is put on the coating, but will be fluid at a lower temperature thus limiting its use.

Producers of coating agents for food ingredients, currently, mainly offer E471 containing 60% -100% mono-glycerides, but the invention is not limited to these percentages. The higher the percentage of mono-glycerides, the more expensive E471 becomes.

Thus, the choice of the mono-glyceride and di-glycerides content in E471 depends on the products for which it will be used, on the production process and on the manufacturing costs that the entrepreneur intends to incur.

The invention is related also to the use of E471 as a coating agent in any coating process. E471 can be applied using any coating process applicable in the food industry. Using E471 does not require the existing/known coating processes itself to be changed. The coating may be applied in any way known in the food industry, for example using an open, rotating pan, which creates larger particles (usually > 2 mm), or for example by using a fluid air bed which creates smaller particles (usually < 2 mm) or by any other technique known to people working in this field of expertise.

There are no limits to the temperature range in which E471 can be applied other than the stability of the chemical structure of E471 itself. E.g. E471 mono-glycerides have relative high melting ranges (60 °C - 75 °C).

The temperature range in which E471 can be used is comparable to the temperature range in which the currently used coatings are applied. This means that the usage of E471 doesn't require any adjustment of currently used production processes or production technologies.

This patent is not limited to using E471 in temperature ranges mentioned above.

Layer thickness as well as layer firmness can be managed with E471 in the same way as with the currently used coating agents. Because E471 is available in many different qualities, coatings with different characteristics (firmness and/or melting range) can easily be obtained by choosing the right type of E471.

This patent is not limited to using E471 in layer thicknesses and/or layer firmness as is currently in use with the mainly used coating agents at the time of writing this patent.

The present invention relates to any food or drink which contains E471 as a coating agent.

E471 can be used as a coating agent for any food ingredient coated with currently used coating agents. Examples of coated ingredients for which E471 can replace currently used coating agents include but are not limited to: coated kitchen salt, coated Sodium Bicarbonate, coated citric acid, coated malic acid, coated tartaric acid, coated spices and coated ammonium chloride. This patent is not limited to using E471 to replace the examples mentioned here.

Food ingredients coated with the invention can be used in any food product. Some examples of food products in which with E471 coated food ingredients can be used are candy, chewing gum, candy bars and herbs and spices.

The examples are mentioned only to support the description of this patent and do not limit the usage of E471 as a coating agent for food ingredients and do not limit the use of food ingredients coated with E471 in any food product.

It is obvious to a person skilled in this field of expertise that the invention and its embodiments may vary within the scope of the claims.

E471 is easy to apply, non-tacking, near tasteless and provides the coated ingredient excellent protection against moisture and interaction with other ingredients.

Furthermore, the usage of E471 doesn't have any negative effect on the quality and/or taste of the food in which the coated food ingredients are used.

Another huge advantage of E471 over the currently applied coatings, is that it is can be made from plant origin (unlike e.g. gelatine) and, therefore, it is suitable for vegetarians and can be used in Kosher/Haial quality foods.

E471 is available in a trans-fat free quality. This is a huge advantage seeing as trans-fat is black-listed by many food producers and food retailers.

Furthermore the E471-derived coating can be produced from local, sustainable grown sources (like e.g. rapeseed); this is a clear advantage compared to carnaubawax or palm stearate which have high carbon footprints. E471, unlike e.g. waxes, is listed as quantum satis^{(*)} in most food applications by the European Union.
^{(***)} *Quantum satis* should be understood as adding as much of this ingredient as is needed to achieve the desired result, but not more.

The invention will be illustrated in greater detail by reference to the following examples supporting the description of the use of E471 as a coating agent for food ingredients. However it is to be understood that the invention cannot be considered as being restricted thereto. The mentioned methods or examples should be considered as a description of this invention and a comparison of the usage of E471 to generally used coating techniques of mainly used coating agents currently used.

Reference Example 1 provides an example of the production of a food ingredient coated with E471 as the food coating agent. The result, a coated food ingredient, can be applied in the Examples.

### REFERENCE EXAMPLE 1. COATING PROCESS

Citric acid is put in a fluid air bed. The air used in the fluid air bed has been heated up to 55 - 60 °C (the temperature below the setting point of the applied form of E471 used, containing 95 % mono-glycerides (melting range 67 to 76 °C)). Molten E471 is constantly sprayed onto the airbed. E471 will set on the surface of the citric acid, surrounding citric acid crystals with a layer of E471. After the proper amount of E471 is applied (e.g. 15 %), working temperature in the fluid air bed is lowered to ambient conditions and the coated citric acid is ready to be discharged from the fluid air bed.

When melted and applied to the surface of the ingredient, a firm film (coating layer) of E471 is formed on the surface of the ingredient.

### EXAMPLE 1. SWEET AND SOUR COATED JELLIES

Gelatine jellies are soft jellies. They are typically made from glucose, sugar and gelatine (but some starch might be included). They have a soft, rubber-like texture and are available in many different shapes and flavours. The surface of these products can be shiny (oiled) or sugar sanded. Sugar sanding can be made of pure sugar or of a blend of sugar with coated crystalline food acid like malic acid, citric acid or tartaric acid.

Here, by way of example, jellies were sanded with a coating of sugar with coated crystalline citric acid. Usually moisture and water activity of these jellies are relatively high. Common are moisture levels of approximately 18 % and a water activity of 0.65. If no coating or insufficient coating around the citric acid is applied, the surface of the product will become wet and sticky during the product shelf life.

Because of high amounts of water in this product, a thick coating layer (about 15%) of E471 is necessary around the citric acid. E471 contained about 95 % mono-glycerides, which allows for higher temperatures during production. The mechanical strain was reasonably high, but the thickness of the layer ensures sufficient coating surrounding the citric acid.

### Ingredients:

| | |
|---|---|
| Jelly | 1000 grams |
| Sugar | 93 grams |
| Coated citric acid containing a 15% E471 coating | 7 grams |

The coated citric acid was obtained using the method described in Reference Example 1. Sugar and coated citric acid were blended. The surface of the jellies was steamed with low pressure wet steam resulting in a wet, sticky surface. The steamed jellies and the sugar-acid blend were put in a rotating drum. Due to the movement of the drum the sugar-acid blend is glued to the surface of the product.

The result was a sugar-acid coated jelly which gives a taste experience which is a mixture of sweet and sour. Because of the coating around the acid, shelf life was greatly improved: from a few weeks to more than eighteen (18) months.

### EXAMPLE 2. DUSTED CHEWING GUM STICKS, DUSTED WITH AMMONIUM CHLORIDE

In some countries (especially Scandinavia) liquorice chewing gum sticks dusted with a mixture of sugar powder and ammonium chloride are very popular. Ammonium chloride, an inorganic compound with the formula NH₄Cl, is a white crystalline salt. Ammonium chloride is highly soluble in water. If no coating or insufficient coating around the ammonium chloride is applied, the surface of the product will become wet during the product shelf life.

In this case E471 contained about 60 % mono-glycerides and 40 % di-glycerides seeing as neither the temperature nor the mechanical strain were high during production. Because of the hygroscopic nature of ammonium chloride, a coating layer of medium thickness (about 10%) of E471 is necessary around the ammonium chloride.

### Ingredients:

| | |
|---|---|
| Chewing gum sticks | 1000 grams |
| Sugar powder | 40 grams |
| Ammonium Chloride containing a 10% E471 coating | 10 grams |

Sugar powder and coated ammonium chloride were blended. After extrusion the chewing gum was rolled in order to form chewing gum sticks. The chewing gum sticks were deposited on a belt which was covered with the powder sugar-ammonium chloride blend. The chewing gum sticks were also covered with the powder sugar-ammonium chloride blend.

The result was a dusted product which gives a taste experience which is a mixture of sweet and salty. Because of the coating around the acid, shelf life was greatly improved: from a few weeks to more than eighteen (18) months.

### EXAMPLE 3. SWEET & SOUR SANDED EXTRUDED CANDY

Extruded candy is made of starch (e.g. wheat starch), sugar and glucose. Other ingredients, like gelatine, might also be included. Extruded candy has a hard, rubber-like texture. The candy is formed in an extrusion process. The surface of these products can be shiny (oiled) or sugar sanded. Sugar sanding can be made of pure sugar or of a blend of sugar with coated crystalline food acid like malic acid, citric acid or tartaric acid.

Here, by way of example, extruded candy was sanded with a coating of sugar with coated crystalline malic acid. Usually, moisture and water activity of this type of product are relatively low. Moisture is less than 10 % (< 10%) and water activity is less than 0.65 (< 0.65). If no coating or insufficient coating around the malic acid is applied, the surface of the product will become wet and sticky during the product shelf life.

Because of the low amount of water in these products, a thin coating layer (about 5%) of E471 is sufficient. The E471 contained about 95 % mono-glycerides, which allows for higher temperatures during production. The mechanical strain was relatively low.

### Ingredients:

| | |
|---|---|
| Jelly | 1000 grams |
| Sugar | 100 grams |
| Coated malic acid containing a 5% E471 coating | 10 grams |

Sugar and coated malic acid were blended. The surface of the extruded candy was steamed with low pressure wet steam resulting in a wet, sticky surface. The sticky extruded candy was deposited on a belt which is covered with the sugar-acid blend. The sticky extruded candy was also covered with the sugar-acid blend.

The result was a sugar-acid sanded extruded product which gives a taste experience which is a mixture of sweet and sour. Because of the coating around the acid, shelf life was greatly improved: from a few weeks to more than eighteen (18) months.

## Claims

1. The use of E471 as a coating agent for food ingredients.

2. The method of preparation of E471 to be used as a coating agent for food ingredients as claimed in claim 1 **characterised in that** pure, undiluted E471 powder is heated until the E471 powder becomes a liquid which then is used to coat any food ingredient.

3. A food or a drink which comprises a coating agent as claimed in any one of claims 1-2.
